# EUROPÄISCHE PATENTANMELDUNG

(11) **EP 2 625 963 A1**
(43) Veröffentlichungstag der Anmeldung: **14.08.2013**
(21) Anmeldenummer: 12154381.3
(22) Anmeldetag: 08.02.2012
(51) Int. Cl.: A23G 3/20, A23G 3/00

(54) **Giessmaschine und Verfahren zur Herstellung eines Verschlusses für ein hohlkörperartiges Verzehrgut**

(71) Anmelder: Bühler Bindler GmbH, 51702 Bergneustadt (DE)
(72) Erfinder: Hörter, Martin, 51580 Reichshof-Heide (DE); Meurer, Martin, 51702 Bergneustadt (DE)
(74) Vertreter: Hepp Wenger Ryffel AG

(57) **Zusammenfassung**

Die Erfindung betrifft eine Düse zum Abgeben von Verschlussmaterial, insbesondere einer Fettmasse, um einen verzehrbaren Hohlkörper zu schliessen, eine Giessmaschine mit einer Düse und ein Verfahren zur Herstellung eines Verschlusses für ein hohlkörperartiges Verzehrgut, insbesondere eines gefüllten Verzehrgutes. Die Düse (1) weist eine Achse (2) in Abgaberichtung (3) auf und einen Auslass, mit mehreren, ringförmig um eine Achse (2; 12; 22) der Düse (1; 11; 21) angeordneten Einzelöffnungen (6; 16; 26) oder ausschliesslich einen Auslass (4) in Form mindestens eines Ringspalts.

## Beschreibung

Die Erfindung betrifft eine Giessmaschine und ein Verfahren zur Herstellung eines Verschlusses für ein hohlkörperartiges Verzehrgut, insbesondere ein gefülltes Verzehrgut, sowie eine Düse zum Abgeben von Verschlussmaterial, insbesondere einer Fettmasse, um den Hohlkörper zu schliessen.

Für die Herstellung gefüllter Verzehrgüter, insbesondere mit einem Hohlkörper bestehend aus einer Fettmasse, bevorzugt mit einer Schokoladenhülse, sind verschiedene Verfahren bekannt.

Bei den bekannten "klassischen" Verfahren erfolgen drei aufeinanderfolgende Verfahrensschritte, nämlich Hülsen-Bildung, Hülsen-Befüllung und Deckel-Herstellung, für die jeweils eine Giessmaschine verwendet wird. Dies ermöglicht die Herstellung geometrisch komplizierter Produktformen sowie die Verwendung von Massen mit stark unterschiedlichen Eigenschaften wie z. B. grossen Viskositätsunterschieden für die Hülsenmasse, die Füllungsmasse und die Deckelmasse. Die Hülse kann mit einem Kaltstempelverfahren hergestellt werden, das besonders für komplexere Formen mit grossen Öffnungen geeignet ist. Vor dem Deckeln wird der Rand der Hülse in der Regel geglättet und/oder erwärmt. Der aufgebrachte Deckel wird mit einem Deckelschaber glatt gezogen. Das Verfahren ist geeignet für Hülsen, die zum Füllen und Deckeln komplett in einer Form gehalten werden können. Erhabene Hohlkörper, die aus einer Teilform hervorstehen, können nicht mit einem Deckelschaber bearbeitet werden.

Alternativ können zur Ausbildung von geschlossenen Hohlkörpern jeweils gefüllte Halbschalen zusammengeklappt werden. Diese sind allerdings aufgrund des Verbindungsbereichs, der eine Sollbruchstelle bildet, weniger stabil.

Für grossvolumige und rotationssymmetrische Verzehrgüter wird Masse in eine Form gefüllt und ein Hohlkörper durch Rotation der Form hergestellt. Anschliessend wird eine Einfüllstelle durchstossen, die Füllung eindosiert und die Einfüllstelle verschlossen.

Um den Anlagen- und Verfahrensaufwand für die Herstellung von Pralinen zu verringern, wurde ein Verfahren entwickelt, bei dem die Hülsen-Bildung, die Hülsen-Befüllung und die Deckel-Herstellung in einem einzigen Verfahrensschritt bzw. mit nur einem einzigen "Schuss" erfolgen. Bei diesem so genannten One-Shot-Verfahren wird durch eine einzige Düse, die ein zentrales Röhrchen und einen das zentrale Röhrchen umgebenden Kanal aufweist, die Schokolade für die Hülse über den Kanal und die Füllung über das Röhrchen mittels eines Schusses in eine Form eingebracht. Dadurch entsteht eine Praline, bei der die Füllung von der Schokolade vollständig umgeben ist. In ähnlicher Weise kann auch zunächst eine Hülse, zum Beispiel mit einem Kaltstempelverfahren, gefertigt werden und in einem anschliessenden Schritt das Füllen und Schliessen erfolgen. Dadurch ist zwar die Herstellung eines kompletten Produktes mit wenigen Giessschritten möglich, doch eignen sich diese Verfahren nur für die Verarbeitung von Massen mit ähnlichen Viskositäten.

Für Füllungen, die keine festen Bestandteile enthalten, reicht eine kleine Hohlkörperöffnung aus, die nach dem Dosieren der Füllmasse leicht verschlossen werden kann. Für solche Füllungen können im One-Shot-Prozess Düsen mit kleinen Durchmessern verwendet werden.

Enthält die Füllung dagegen feste Bestandteile wie Nüsse, Mandeln oder Krokant, so muss die Düse zur Befüllung einen grösseren Öffnungsdurchmesser aufweisen. Entsprechend grösser muss die Öffnung im Hohlkörper sein. Verschlüsse für grössere Öffnungen können nicht quasigleichzeitig mit der Füllung dosiert werden.

Es besteht daher die Aufgabe, die Nachteile des Bekannten zu überwinden und eine Vorrichtung sowie ein Verfahren vorzustellen, mit welchen auf einfache Weise und verlässlich Öffnungen von Hohlkörpern geschlossen werden können.

Die Aufgabe wird gelöst durch eine Düse zum Giessen von verzehrfähigem Verschlussmaterial, insbesondere zur Verwendung in einer Giessmaschine zur Herstellung eines Verschlusses für ein hohlkörperartiges Verzehrgut.

Bei dem hohlkörperartigen Verzehrgut handelt es sich insbesondere um ein gefülltes Verzehrgut, weiter insbesondere um ein schalenartiges Verzehrgut aus mindestens zwei verschiedenen Massen, von denen die erste eine Hülse bzw. Schale des Verzehrgutes und die zweite eine Füllung des Verzehrgutes bildet. Die Füllung ist bevorzugt heterogen und enthält fliessfähige und feste Bestandteile.

Das Verschlussmaterial ist bevorzugt eine Fettmasse, insbesondere Schokolade.

Die Düse weist eine Achse in Abgaberichtung auf. In der Regel wird die Masse in Richtung der Schwerkraft abgegeben, sodass die Achse bevorzugt in Richtung der Vertikalen liegt.

Die Düse weist einen Auslass mit mehreren ringförmig um die Achse der Düse angeordneten Einzelöffnungen auf.

Alternativ weist die Düse ausschliesslich einen Auslass in Form mindestens eines Ringspalts auf.

Mit Ring ist in der vorliegenden Anmeldung eine geschlossene Form mit einem leeren Inneren gemeint. Ein Ring kann eine gekrümmte Kontur aufweisen oder eckig sein. Insbesondere ist der Ring kreisförmig.

Der Ringspalt ist geschlossen. Das heisst, die Masse kann bei einer Düse mit Ringspalt gleichzeitig überall aus einem ringförmigen Bereich austreten. Allerdings wird keine Masse innerhalb des Rings abgegeben.

Erfindungsgemäss hat die Düse somit einen Austrittsbereich, der auf einer insbesondere um die Achse konzentrischen, geschlossenen Linie liegt, wobei diese gedachte Linie insbesondere der Kontur der Hohlkörperöffnung entspricht.

Mit der Düse einer erfindungsgemässen Giessmaschine kann das Verschlussmaterial derart auf den Rand einer Hohlkörperöffnung aufgetragen werden, dass der gesamte Rand der Öffnung praktisch gleichzeitig mit Material versehen wird. Beim Zusammenfliessen des Verschlussmaterials in Richtung des Zentrums der Hohlkörperöffnung trifft das Material auf gegenüberliegend aufgetragenes Material und kann sich gegenseitig abstützen.

Die Düse kann temperierbar sein, z. B. aus einem wärmeleitfähigen Material, z. B. Metall, bestehen und/oder Kanäle für ein Temperierfluid aufweisen.

Die Düse weist insbesondere vier, weiter insbesondere sechs Einzelöffnungen auf.

Bevorzugt sind die Einzelöffnungen symmetrisch um eine zentrale Achse angeordnet, insbesondere konzentrisch um die Achse angeordnet, sodass alle Einzelöffnungen denselben Abstand zu der zentralen Achse der Düse besitzen. Bevorzugt gibt es zu jeder Einzelöffnung eine weitere Einzelöffnung, die punktsymmetrisch zu der Achse angeordnet ist.

Die Düse kann auch eine Auslass in Form mehrerer Ringspalte aufweisen oder Einzelöffnungen, die auf mehreren Ringen um die Achse herum angeordnet sind.

In einer vorteilhaften Ausführung weist die Düse zusätzlich zu mehreren ringförmig um die Achse der Düse angeordnete Einzelöffnungen eine weitere Auslassöffnung im Zentrum des Rings auf.

Die Einzelöffnungen können Enden einzelner Auslasskanäle sein.

In einer vorteilhaften Ausführungsform weist die Düse mindestens einen Auslasskanal auf, dessen Ausströmrichtung gegenüber der Achse der Düse geneigt ist.

Dazu ist entweder der Auslassspalt der Ringöffnung konisch angeordnet oder die einzelnen zu den ringförmige angeordneten Einzelöffnungen führenden Auslasskanäle der Düse sind gegenüber der Achse der Düse entgegen der Abgaberichtung geneigt und liegen somit auf einem Konus.

Bevorzugt wird die Masse beim Durchfliessen der Düse von der Achse wegbewegt. Die ausgetretene Masse läuft dann nach Austritt aus der Düse aufgrund der Schwerkraft bevorzugt in Richtung der Achse, also in Richtung des Zentrums der Hohlkörperöffnung und nicht von der Achse weg.

Vorteilhafterweise besitzt die Düse einen Vorratsbereich zum Bevorraten des Verschlussmaterials aufweist. Aus dem Vorratsbereich werden die Auslasskanäle gespeist. Durch den Vorratsbereich innerhalb der Düse wird gewährleistet, dass die Verschlussmasse gleichmässig aus den Einzelöffnungen oder dem Ringspalt austritt.

Die Aufgabe wird weiterhin gelöst mit einer Giessmaschine zur Herstellung eines Verschlusses für ein hohlkörperartiges Verzehrgut, umfassend mindestens eine Düse, insbesondere wie oben beschrieben, zum Abgeben von Verschlussmaterial, um den Hohlkörper zu schliessen, wobei die Düse eine Achse in Abgaberichtung aufweist.

Die Düse weist einen Auslass mit mehreren ringförmig um eine Achse der Düse angeordneten Einzelöffnungen auf oder die Düse weist ausschliesslich einen Auslass in Form mindestens eines Ringspalts auf.

Zusätzlich zu den ringförmig angeordneten Einzelöffnungen kann die Düse eine weitere zentral angeordnete Auslassöffnung aufweisen.

In einer vorteilhaften Ausbildung der Erfindung ist die mindestens eine Düse frei drehbar, bevorzugt um die Achse in Abgaberichtung. Während des Vergiessens kann die Düse gedreht werden, sodass das Verschlussmaterial auf den gesamten Rand der Hohlkörperöffnung aufgetragen wird, auch wenn der Düsenauslass in Form von ringförmig angeordneten Einzelöffnungen ausgebildet ist.

Typischerweise sind die Hohlkörper auf einem Tablett angeordnet und werden mit einem Band oder einer Kettenfördereinrichtung derart an die Giessmaschine gebracht, dass sich jeweils ein Hohlkörper unter einer Düse befindet.

Die Aufgabe wird weiterhin gelöst durch eine Giessmaschine zum Verschliessen von verzehrfähigen Hohlkörpern mit einem verzehrfähigen Verschlussmaterial, insbesondere wie oben beschrieben, mit mindestens einer Düse, die einen Auslass mit mindestens einer Auslassöffnung aufweist. Die Giessmaschine weist aussermde eine Bewegungsvorrichtung zum Bewegen der Düse und/oder zum Bewegen eines Hohlkörperhalters zum Halten von mindestens einem Hohlkörper auf. Die Bewegungsvorrichtung bewirkt eine ringförmige Bewegung des Düsenauslasses und/oder des Hohlkörperhalters um mindestens eine Achse in Abgaberichtung. Auf diese Weise kann Verschlussmaterial gezielt auf den Rand der Hohlkörperöffnung dosiert werden.

Vorteilhafterweise besitzt die Giessmaschine eine mit Düse mindestens eine Ausgabeöffnung, die exzentrisch um die Achse in Ausgaberichtung bewegbar ist.

Für die Dosierung muss somit nur ein kleines Bauteil bewegt werden, nämlich die Düse und es nicht notwendig, die gesamte Abgabeeinheit der Giessmaschine in Bewegung zu versetzen, Das spart Platz und Energie. Die Düse kann so auf einer Bewegungseinheit angebracht sein, dass eine zentrale Ausgabeöffnung ringförmig bewegt wird.

Die der Erfindung zugrunde liegende Aufgabe wird allerdings auch erfüllt durch eine Düse, mit einer zentralen Achse in Ausgaberichtung, wobei mindestens eine Ausgabeöffnung nicht auf der Achse liegt.

Die Düse ist, wenn sie in der Giessmaschine montiert ist, um die zentrale Achse drehbar.

Typischerweise ist der Abstand der Auslassöffnung von der Achse halb so gross wie der Durchmesser der Hohlkörperöffnung.

Die Giessmaschine weist typischerweise mindestens ein Kolbensystem auf, mittels dem die Masse durch die Auslasskanäle gedrückt wird. Bei Düsen mit zusätzlicher zentraler Öffnung liegen bevorzugt unabhängige Kolbensysteme für die zentrale und die ringförmig angeordneten Einzelöffnungen vor. Es kann dann zuerst die Verschlussmasse auf der Ringform abgegeben und anschliessend im Zentrum nachdosiert werden.

In einer bevorzugten Ausführungsform umfasst die Giessmaschine einen Hohlkörperhalter und eine Bewegungseinrichtung zum relativen Bewegen von Düse und Hohlkörperhalter in Abgaberichtung. Dafür ist der Hohlkörperhalter und/oder ist die Düse bewegbar, also absenkkbar und/oder anhebbar.

In einer beispielhaften Ausführungsform führt der Auslass der Düse eine spiralförmige Bewegung aus, der sich aus einer Drehbewegung um die Ausgabeachse und einer Vertikalbewegung gegenüber dem Hohlkörper zusammensetzt.

Zu Beginn des Giessvorgangs kann der Hohlkörper nahe an die Düse herangeführt werden oder die Düse nähert sich an den Hohlkörper an. Während des Vergiessens kann der Abstand zwischen Düsenöffnung und Hohlkörper vergrössert werden, sodass die Verschlussmasse frei fliessen kann.

Die Aufgabe wird weiterhin gelöst durch eine Giessanlage zur Herstellung von verzehrfähigen gefüllten Hohlkörpern mit einer Vorrichtung zum Herstellen eines verzehrfähigen Hohlkörpers mit einer Hohlkörperöffnung, einer Giessmaschine zum Eindosieren der Füllung über die Hohlkörperöffnung in den Hohlkörper und einer Giessmaschine zum Auftragen eines Verschlusses auf einen Rand die Hohlkörperöffnung, um den gefüllten Hohlkörper zu schliessen, wie oben beschrieben.

Der Hohlkörper wird beispielsweise hergestellt, indem eine Hohlkörpermasse, bevorzugt eine Fettmasse, insbesondere Schokolade, in eine Giessform, bevorzugt eine Makrolonform, gegossen und dort durch Rotation verteilt wird. Alternativ kann der Hohlkörper als ein Klappformartikel gefertigt sein.

Bevorzugt wird bei der Herstellung des Hohlkörpers eine Giessform verwendet, welche die Herstellung eines Hohlkörpers erlaubt, der an der der vorgesehene Stelle für die Hohlraumöffnung nach innen gewölbt ist, sodass nach dem Anstechen des Hohlkörpers die Öffnung von einem Sattel umgeben ist, der innerhalb der beabsichtigen Aussenkontur, z. B. einer kugel- oder eiförmigen Kontur des Hohlkörpers liegt und eine Auflagefläche für die Verschlussmasse bildet. Durch das Auftragen des Verschlusses wird die beabsichtigte Aussenkontur des Hohlkörpers vervollständigt.

Alternativ kann der Sattel nach dem Anstechen des Hohlkörpers mit einem Senker angeformt werden.

Das Anstechen erfolgt beispielsweise mit einer Hohlnadel, durch die Druckluft leitbar ist. Der ausgestanzte Teil der Hohlform kann mit der Druckluft in die Hohlform geblasen werden, sodass die Hohlnadel erneut verwendbar ist.

Weiterhin kann durch die Hohlnadel nach dem Anstechen auch Füllmasse in die Hohlform geleitet werden. Auf dieses Weise sind das Anstechen und Füllen der Hohlform mittels einer kombinierten bzw. gemeinsamen Anstech- und Füllvorrichtung, insbesondere der Hohlnadel, ausführbar.

Die Aufgabe wird ausserdem gelöst durch ein Verfahren zum Auftragen eines verzehrfähigen Verschlusses oder einer verzehrfähigen Schutzschicht auf eine Hohlkörperöffnung eines Verzehrgutes, insbesondere eines gefüllten Verzehrgutes, um einen insbesondere gefüllten Hohlkörper zu schliessen. Das Verfahren weist mindestens die folgenden Schritte auf:
Bereitstellen eines verzehrfähigen Hohlkörpers mit einer Hohlkörperöffnung und
Giessen eines verzehrfähigen Verschlussmaterials auf einen Rand der Hohlkörperöffnung. Dabei wird kein Material, weder Verschlussmasse noch Füllmasse in das Zentrum der Hohlkörperöffnung gegossen. Das Verfahren erfolgt insbesondere mit einer Giessmaschine wie oben beschrieben.

In einer vorteilhaften Ausführungsform des erfindungsgemässen Verfahrens wird anschliessend Verschlussaterial in den Bereich des Zentrums der Hohlkörperöffnung dosiert. Diese trifft auf vorher ringförmig dosierte Verschlussmasse und dient dazu, die Hohlraumöffnung endgültig zu verschliessen und die Aussenkontur des Hohlkörpers zu vervollständigen.

Bevorzugt entfernen sich beim Giessen der Verschlussmasse die Düse, aus der die Verschlussmasse auf die Hohlkörperöffnung gegossen wird, und der Hohlkörper voneinander, damit die Verschlussmasse nicht an der Düse haften bleibt, sondern sauber abreisst.

Bleibt die Düse in der Nähe der Hohlraumöffnung, so kann die Düse die Massen in eine bestimmte Fliessrichtung zwingen. Beim gegenseitigen Entfernen von Düse und Hohlkörper kann die Verschlussmasse jedoch frei in Richtung des Zentrums der Hohlraumöffnung fliessen.

Die Aufgabe wird ausserdem gelöst durch ein Verfahren zur Herstellung eines gefüllten Verzehrgutes, insbesondere eines schalenartigen Verzehrgutes aus mindestens zwei verschiedenen Massen, von denen die erste eine Hülse bzw. Schale des Verzehrgutes und die zweite eine Füllung des Verzehrgutes bildet. Das Verfahren weist mindestens die folgenden Schritte auf: Herstellen eines Hohlkörpers, die eine Hohlkörperöffnung aufweist, Eindosieren einer Füllung durch die Hohlkörperöffnung in den Hohlkörper, insbesondere einer Füllung, die feste Bestandteile enthält, und Auftragen eines Deckels oder einer Schutzschicht auf die Hohlkörperöffnung, wie oben beschrieben.

Das Herstellen des Hohlkörpers mit Öffnung kann in einem Schritt oder in Teilschritten erfolgen, wobei beispielsweise zunächst ein Vollhohlkörper hergestellt wird, der anschliessend angestochen wird. Falls notwendig, kann mit einem Senker ein Sattel in der Hülsenöffnung geformt werden.

Bevorzugt wird der Hohlkörper mit einer nach innen gerichteten Wölbung an der vorgesehenen Stelle für die Hohlraumöffnung gefertigt. Die Verschlussmasse kann dann auf eine sattelförmige Fläche, die sich beim Anstechen um die Öffnung herum ergibt, gegossen werden. Durch das Auftragen des Verschlusses wird die beabsichtigte Aussenkontur des Hohlkörpers vervollständigt.

Eine Düse wie oben beschrieben eignet sich zum Giessen von Fettmasse, insbesondere Schokolade, und zur Verwendung beim Auftragen eines Verschlusses auf eine Hohlkörperöffnung, wie oben beschrieben.

Eine erfindungsgemässe Düse kann auch verwendet werden, um eine bestehende Giessmaschine umzurüsten. Dazu wird zunächst mindestens eine der vorhandenen Düse zum Giessen eines Verschlusses entfernt und anschliessend mindestens eine Düse wie oben beschrieben montiert.

Die Erfindung wird nachfolgend anhand von Ausführungsbeispielen näher erläutert. Es zeigen:
- Figur 1: eine schematische Schnittdarstellung in Axialrichtung eines ersten Beispiels für eine Düse;
- Figur 2: eine schematische Darstellung des ersten Beispiels für eine Düse in Draufsicht entgegen der Abgaberichtung;
- Figur 3: eine schematische Schnittdarstellung in Axialrichtung eines zweiten Beispiels für eine Düse;
- Figur 4: eine schematische Darstellung des zweiten Beispiels für eine Düse in Draufsicht entgegen der Abgaberichtung;
- Figur 5: eine schematische Schnittdarstellung in Axialrichtung eines dritten Beispiels für eine Düse;
- Figur 6: eine schematische Darstellung des dritten Beispiels für eine Düse in Draufsicht entgegen der Abgaberichtung;
- Figur 7: eine schematische Darstellung beispielhafter Schritte für ein Verfahren zur Herstellung eines gefüllten Verzehrgutes auf einer beispielhaften Giessanlage;
- Figur 8: eine schematische Schnittdarstellung in Axialrichtung eines vierten Beispiels für eine Düse;
- Figur 9: eine schematische Darstellung des vierten Beispiels für eine Düse in Draufsicht entgegen der Abgaberichtung.

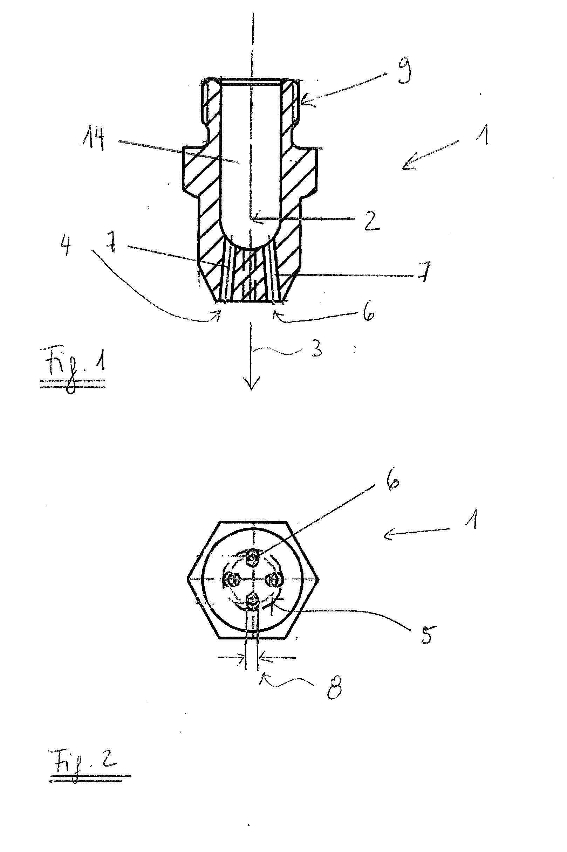

Figur 1 zeigt eine schematische Schnittdarstellung in Axialrichtung eines ersten Beispiels für eine Düse 1 und Figur 2 zeigt eine schematische Darstellung derselben Düse 1 in Draufsicht entgegen der Abgaberichtung 3.

Die Düse 1 weist eine Achse 2 in Abgaberichtung 3 auf. Der Auslass 4 der Düse 1 besitzt die Form von Einzelöffnungen 6, die auf einem Ring 5 um die Achse 2 der Düse 1 herum angeordnet sind.

Die Düse 1 weist dabei vier ringförmig um die Achse 2 angeordnete Einzelöffnungen 6 auf. Die Einzelöffnungen 6 sind jeweils Auslasskanälen 7 zugeordnet, die gegenüber der Achse 2 geneigt sind und einen Austrag der Verschlussmasse nach aussen bewirken.

Der Durchmesser 8 der Einzelöffnungen 6 beträgt etwa 2 mm.

Die Auslasskanäle 7 werden aus einem Vorratsbereich 14 gespeist.

Die Düse 1 hat eine Gewinde 9 und kann somit leicht an einer Giessmaschine befestigt und/oder ausgetauscht werden. Die Düse 1 ist aus Aluminium, insbesondere AlMgSi1, gefertigt. Dies Düse 1 kann auch zum Beispiel aus Kunststoff oder Edelstahl gefertigt sein.

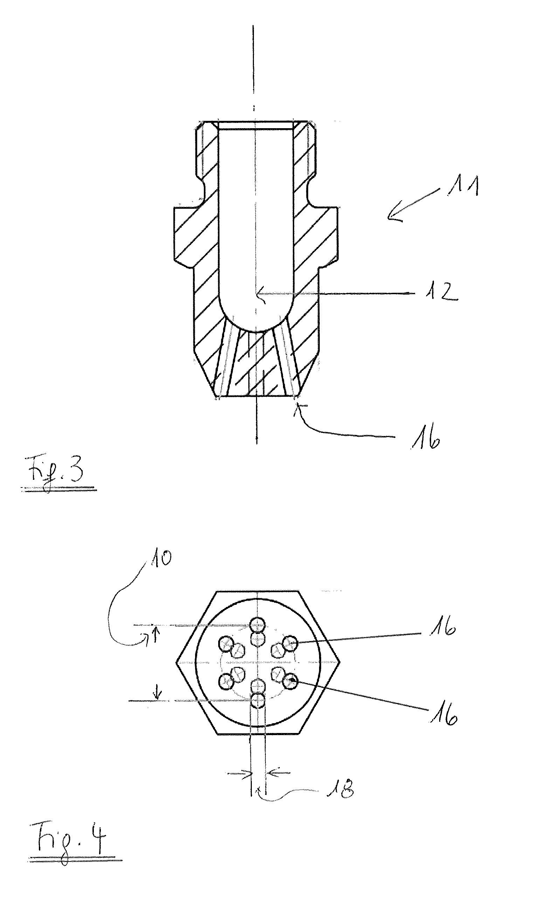

Figur 3 zeigt eine schematische Schnittdarstellung in Axialrichtung eines zweiten Beispiels für eine Düse 11, Figur 4 eine schematische Darstellung derselben Düse 11 in Draufsicht entgegen der Abgaberichtung 3. Die Düse 11 hat sechs Einzelöffnungen 16, die ringförmig um die Achse 12 der Düse 11 angeordnet sind. Die Einzelöffnungen weisen ebenfalls Durchmesser 18 von 2 mm auf. Die Einzelöffnungen 16 liegen auf einem Kreis mit einem Durchmesser 10 von 10 mm.

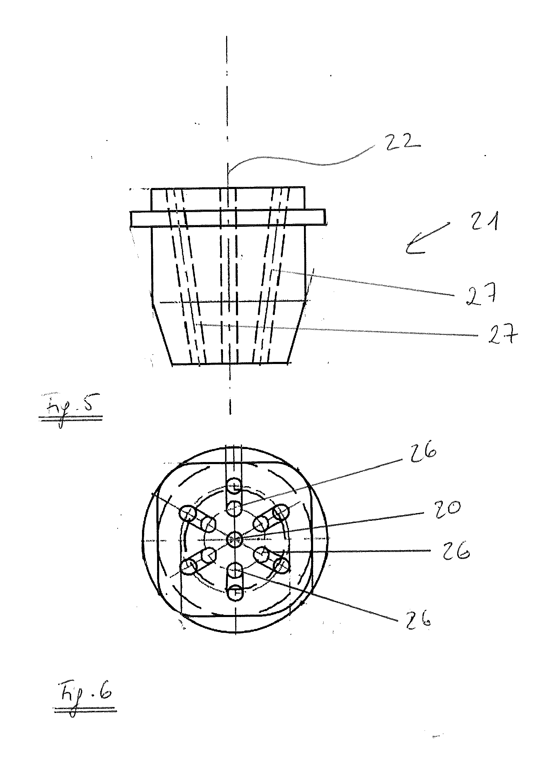

Figur 5 zeigt eine schematische Schnittdarstellung in Axialrichtung eines dritten Beispiels für eine Düse 21, Figur 6 eine schematische Darstellung derselben Düse 21 in Draufsicht entgegen der Abgaberichtung 3. Die Düse 21 hat ebenfalls sechs Einzelöffnungen 26, die ringförmig um die Achse 22 der Düse 21 angeordnet sind und ausserdem eine zentral angeordnete Auslassöffnung 20.

Die Einzelöffnungen 26 sind jeweils Auslasskanälen 27 zugeordnet, die gegenüber der Achse 22 geneigt sind und einen zueinander gerichteten Austrag erlauben.

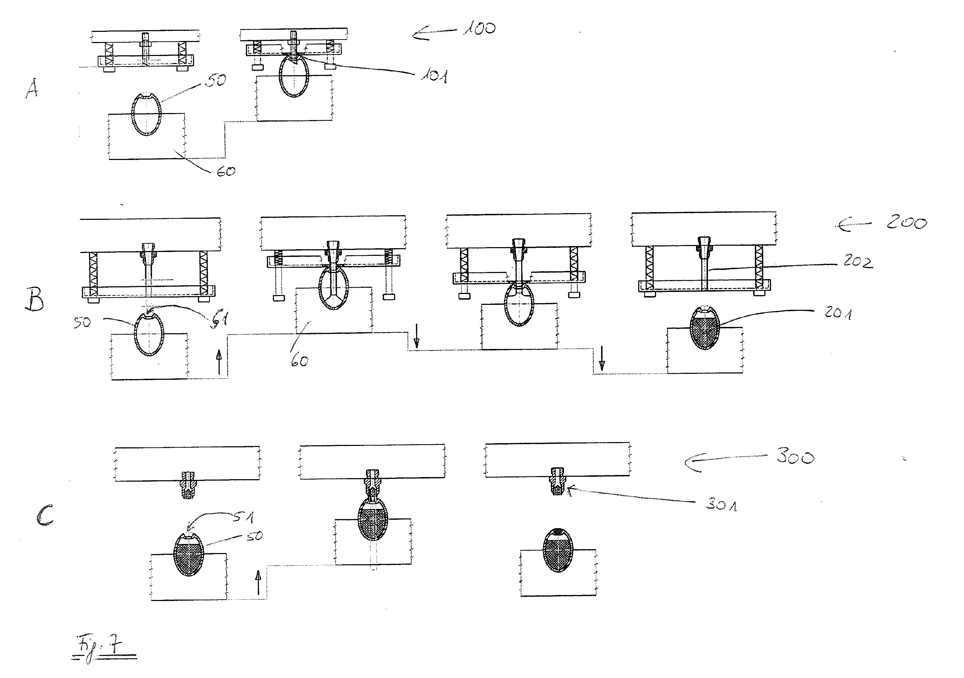

Figur 7 zeigt eine schematische Darstellung beispielhafter Schritte für ein Verfahren zur Herstellung eines gefüllten Verzehrgutes auf einer beispielhaften Giessanlage.

In einem ersten nicht explizit gezeigten Verfahrensschritt wird eine Hohlkörper 50 bereitgestellt, der auf einem Tablett 60 zu den Stationen der Giessanlage transportiert wird.

Die Hohlkörper sind in der Regel kugel- oder eiförmig. Es kommen aber auch figurative Formen wie Nikoläuse oder Osterhasen in Frage.

In einem Verfahrensschritt A wird der Hohlkörper 50 mit einer Hohlkörperöffnung 51 versehen. Dazu wird Hohlkörper 50 mit einer Öffnungsstation 100 mit einer Hohlnadel 101 eingestochen, sodass eine Hohlkörperöffnung 51 mit einem Durchmesser von etwa 8 mm entsteht.

In einem Verfahrensschritt B erfolgt auf einer Giessmaschine 200 zum Eindosieren der Füllung das Eindosieren einer Füllung 201 durch die Hohlkörperöffnung 51 in den Hohlkörper 50. Die Füllung 201 enthält nicht explizit gezeigte feste Bestandteile, z. B. Nüsse, Mandeln, Zucker- und/oder Krokantstücke, sodass die Düse 202 typischerweise einen Durchmesser von mindestens 4 mm, insbesondere mindestens 6 mm, aufweisen muss.

Das Tablett 60 mit dem Hohlkörper 50 wird zunächst an die Düse 202 herangefahren, die Düse 202 in den Hohlkörper hineingeführt, und der Hohlkörper 50 wird beim Vergiessen der Füllung 201 wieder von der Düse entfernt, sodass die Füllmasse gut von der Düse abreisst.

Der Hohlkörper 50 wird mindestens zu einem Viertel seines Volumens, bevorzugt zur Hälfte seines Volumens, weiter bevorzugt zu drei Viertel seines Volumens, gefüllt.

In einem Verfahrensschritt C erfolgt auf einer Giessmaschine 300 zum Auftragen eines Verschlusses auf die Hohlkörperöffnung 51 das Auftragen eines Deckels oder einer Schutzschicht auf die Hülsenöffnung 51. Der gefüllte Hohlkörper 50 wird so geschlossen.

Das Verschlussmaterial wird über eine Düse 301 auf den Rand 52 der Hohlkörperöffnung 51 und insbesondere nicht in die Hohlkörperöffnung dosiert.

Bei der Düse 301 kann es sich um eine wie in den Figuren 1 bis 6 gezeigte Düse handeln.

Vor dem Giessen wird der Hohlkörper 50 mit einer nicht explizit gezeigten Bewegungsvorrichtung in Abgaberichtung 3 an die Düse 301 herangeführt. Beim Giessen der Verschlussmasse werden die Düse 301 und der Hohlkörper 50 voneinander entfernt.

Die Düse kann frei drehbar sein, sodass sich ein in Rotationsrichtung gleichmässiges Abgabemuster einstellt.

Die Düse 301 kann zum Reinigen, Aufarbeiten oder wenn beispielsweise für das Vergiessen andersartiger Füll- und/oder Verschlussmassen andere Durchmesser der Einzelöffnungen notwendig sind abmontiert und wieder aufmontiert werden.

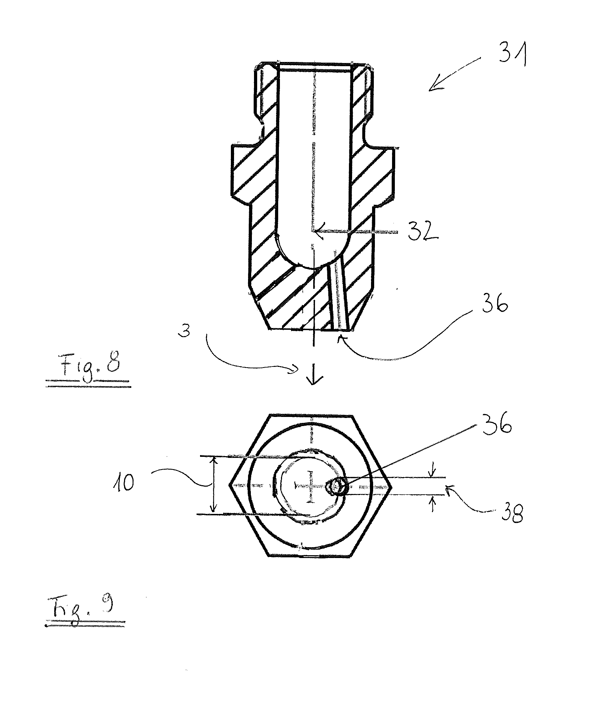

Figur 8 zeigt eine schematische Schnittdarstellung in Axialrichtung eines vierten Beispiels für eine Düse 31, Figur 9 eine schematische Darstellung derselben Düse 31 in Draufsicht entgegen der Abgaberichtung 3. Die Düse 31 hat eine Auslassöffnung 36, die ausserhalb der zentralen Achse 32 der Düse 31 angeordnet sind. Die Auslassöffnung weisen ebenfalls einen Durchmesser 38 von 2 mm auf. Wird die Düse 31 um die die Achse 32 gedreht, erfolgt eine Abgabe der Verschlussmasse auf einem Kreis mit einem Durchmesser 10 von 10 mm.

## Patentansprüche

1. Düse zum Giessen von verzehrfähigem Verschlussmaterial, insbesondere einer Fettmasse, weiter insbesondere Schokolade, insbesondere zur Verwendung in einer Giessmaschine zur Herstellung eines Verschlusses für ein hohlkörperartiges Verzehrgut, wobei die Düse (1; 11; 21) eine Achse (2; 12; 22) in Abgaberichtung (3) aufweist,
**dadurch gekennzeichnet, dass**
- die Düse (1; 11; 21) einen Auslass (4) mit mehreren, insbesondere vier, weiter insbesondere sechs, ringförmig um eine Achse (2; 12; 22) der Düse (1; 11; 21), insbesondere konzentrisch, angeordneten Einzelöffnungen (6; 16; 26) aufweist, und insbesondere die Düse mindestens eine weitere zentral angeordnete Auslassöffnung (20) aufweist; oder
- die Düse (1; 11; 21) ausschliesslich einen Auslass (4) in Form mindestens eines Ringspalts (5) aufweist.

2. Düse gemäss Anspruch 1,
**dadurch gekennzeichnet, dass**
die Düse (1; 11; 21) mindestens einen Auslasskanal (7; 27) aufweist, dessen Ausströmrichtung gegenüber der Achse (2; 12; 22) der Düse geneigt ist.

3. Düse gemäss Anspruch 1 oder 2,
**dadurch gekennzeichnet, dass**
die Düse (1; 11; 21) einen Vorratsbereich (14) zum Bevorraten des Verschlussmaterials aufweist.

4. Giessmaschine zur Herstellung eines Verschlusses für ein hohlkörperartiges Verzehrgut, insbesondere eines gefüllten Verzehrgutes, umfassend mindestens eine Düse (1; 11; 21; 301) gemäss einem der Ansprüche 1-3.

5. Giessmaschine gemäss Anspruch 4
**dadurch gekennzeichnet, dass**
die mindestens eine Düse (1; 11; 21) um eine Achse (2; 12; 22) in Abgaberichtung (3) frei drehbar ist.

6. Giessmaschine zum Verschliessen von verzehrfähigen Hohlkörpern mit einem verzehrfähigen Verschlussmaterial, insbesondere gemäss einem der Ansprüche 4 oder 5,
mit mindestens einer Düse (31), die einen Auslass mit mindestens einer Auslassöffnung (36) aufweist,
und
einer Bewegungsvorrichtung zum Bewegen der Düse (31) und/oder zum Bewegen eines Hohlkörperhalters (60) zum Halten von mindestens einem Hohlkörper (50),
**dadurch gekennzeichnet, dass**
die Bewegungsvorrichtung eine ringförmige Bewegung des Düsenauslasses und/oder des Hohlkörperhalters um mindestens eine Achse (2; 12; 22) in Abgaberichtung (3) bewirkt.

7. Giessmaschine nach Anspruch 6,
**dadurch gekennzeichnet, dass**
die Düse (31) mindestens eine Ausgabeöffnung aufweist, die exzentrisch um die Achse (2; 12; 22; 32) in Ausgaberichtung (3) bewegbar ist, insbesondere die Düse (31) um eine zentrale Achse (2; 12; 22; 32) in Ausgaberichtung (3) drehbar ist, wobei mindestens eine Ausgabeöffnung (36) nicht auf der Achse (2; 12; 22) liegt.

8. Giessmaschine gemäss einem der Ansprüche 4 bis 7,
**dadurch gekennzeichnet, dass**
die Giessmaschine mindestens ein Kolbensystem zur Ansteuerung der Düse (1; 11; 21; 31; 301) aufweist, und insbesondere eine Giessmaschine mit einer Düse (1; 11; 21; 31) mit ringförmig angeordneten Einzelöffnungen (6; 16; 26) und einer zusätzlichen zentral angeordneten Auslassöffnung (20) mindestens ein weiteres Kobensystem aufweist, sodass die ringförmig angeordneten Einzelöffnungen (6; 16; 26) und die zentral angeordnete Auslassöffnung (20) jeweils über separate Kolbensysteme ansteuerbar sind.

9. Giessmaschine gemäss einem der Ansprüche 4-8, **dadurch gekennzeichnet, dass**
die Giessmaschine (300) einen Hohlkörperhalter (60) und eine Bewegungseinrichtung zum relativen Bewegen von Düse (1; 11; 21) und Hohlkörperhalter (60) in Abgaberichtung (3) umfasst.

10. Giessanlage zur Herstellung von verzehrfähigen gefüllten Hohlkörpern mit
- einer Vorrichtung zum Herstellen eines Hohlkörpers (50) mit einer Hohlkörperöffnung (51);
- einer Giessmaschine (200) zum Eindosieren der Füllung (201) über die Hohlkörperöffnung (51) in den Hohlkörper (50) ;
- einer Giessmaschine (300) zum Auftragen eines Verschlusses auf die Hohlkörperöffnung (51), um den gefüllten Hohlkörper (50) zu schliessen, gemäss einem der Ansprüche 4-9.

11. Verfahren zum Auftragen eines verzehrfähigen Verschlusses oder einer Schutzschicht auf eine Hohlkörperöffnung eines Verzehrguts, insbesondere eines gefüllten Verzehrgutes, um einen insbesondere gefüllten Hohlkörper zu schliessen, wobei das Verfahren die folgenden Schritte aufweist:
a) Bereitstellen eines verzehrfähigen Hohlkörpers (50) mit einer Hohlkörperöffnung (51);
b) Giessen eines verzehrfähigen Verschlussmaterials auf einen Rand der Hohlkörperöffnung (51), und insbesondere nicht in die Hohlkörperöffnung (51), insbesondere mit einer Giessmaschine (300) gemäss einem der Ansprüche 4-9.

12. Verfahren zum Auftragen eines verzehrfähigen Verschlusses oder einer Schutzschicht auf die Hohlkörperöffnung gemäss Anspruch 11, **dadurch gekennzeichnet, dass** während oder nach Schritt b) Verschlussmaterial zentral auf die Hohlkörperöffnung (51) dosiert wird.

13. Verfahren zum Auftragen eines verzehrfähigen Verschlusses oder einer Schutzschicht auf die Hohlkörperöffnung gemäss Anspruch 11 oder 12, **dadurch gekennzeichnet, dass** sich beim Giessen des Verschlussmaterials die Düse (1; 11; 21; 31), aus der das Verschlussmaterial auf den Rand der Hohlkörperöffnung (51) gegossen wird, und der Hohlkörper (50) voneinander entfernen.

14. Verfahren zur Herstellung eines gefüllten Verzehrgutes, insbesondere eines schalenartigen Verzehrgutes aus mindestens zwei verschiedenen Massen, von denen die erste eine Hülse bzw. Schale des Verzehrgutes und die zweite eine Füllung des Verzehrgutes bildet,
wobei das Verfahren die folgenden Schritte aufweist:
a) Herstellen eines Hohlkörpers (50), der eine Hohlkörperöffnung (51) aufweist;
b) Eindosieren einer Füllung (201) durch die Hohlkörperöffnung (51) in den Hohlkörper (50), insbesondere einer Füllung (201), die feste Bestandteile enthält; und
c) Auftragen eines Deckels oder einer Schutzschicht auf die Hohlkörperöffnung, gemäss einem der Ansprüche 11 bis 13.

15. Verwendung einer Düse (1; 11; 21; 31) gemäss einem der Ansprüche 1-3 zum Auftragen eines Verschlusses aus Fettmasse, insbesondere Schokolade, insbesondere in einem Verfahren gemäss Anspruch 11 bis 14.

16. Verfahren zum Umrüsten einer Giessmaschine zur Herstellung eines Verschlusses für ein hohlkörperartiges Verzehrgut oder einer Giessanlage zur Herstellung von verzehrfähigen gefüllten Hohlkörpern,
wobei das Verfahren die folgenden Schritte aufweist:
a) Entfernen mindestens einer vorhandenen Düse (301) zum Giessen eines Verschlusses;
b) Montage mindestens einer Düse (1; 11; 21; 31; 301) gemäss einem der Ansprüche 1 bis 3.
